# EUROPÄISCHE PATENTSCHRIFT

(11) **EP 0 387 973 B1**
(45) Veröffentlichungstag und Bekanntmachung des Hinweises auf die Patenterteilung: **01.06.1994**
(21) Anmeldenummer: 90250061.0
(22) Anmeldetag: 06.03.1990
(51) Int. Cl.: H05K 5/06

(54) **Dichtungsrahmen für eine verfahrbare Schaltgeräteanordnung**
Sealing frame for a mobile switching assembly
Cadre d'étanchéité pour un assemblage mobile d'appareils de distribution

(30) Priorität: 15.03.1989 DE 8903374 U
(43) Veröffentlichungstag der Anmeldung: 19.09.1990
(73) Patentinhaber: SIEMENS AKTIENGESELLSCHAFT, 80333 München (DE)
(72) Erfinder: Augsberg, Lothar, D-1000 Berlin 42 (DE); Godesa, Ludvik, D-1000 Berlin 30 (DE); Kugler, Reinhard, D-1000 Berlin 49 (DE)

(56) Entgegenhaltungen:
- AT-B- 369 220
- DE-U- 1 830 872
- US-A- 2 770 701

## Beschreibung

Die Erfindung betrifft einen Dichtungsrahmen für die Bedienungsfront einer verfahrbaren Schaltgeräteanordnung an der Durchtrittsöffnung in einer Tür eines Schaltschrankes. Verfahrbare Schaltgeräteanordnungen können beispielsweise die Gestalt eines mit mehreren Schaltgeräten bestückten Einschubes für eine Schaltanlage aufweisen oder können als ausfahrbar angeordneter Leistungsschalter ausgebildet sein. Die Verfahrbarkeit wird betrieblich dazu vorgesehen, zusätzlich zu der normalen eingefahrenen Stellung, in der sämtliche Leistungs-und Hilfsstromkreise geschlossen sind, noch eine teilweise ausgezogene Prüf- oder Teststellung sowie eine Trennstellung herbeizuführen. Um eine größtmögliche Sicherheit für das Bedienungspersonal zu erreichen, wird angestrebt, alle Fahrvorgänge bei geschlossener Tür der Schaltanlage durchzuführen. Dies erfordert es, daß die Bedienungselemente in allen vorgesehenen Stellungen der Schaltgeräteanordnung zugänglich sind. Der Dichtungsrahmen hat dabei die Aufgabe, sowohl den Bedienenden vor Einflüssen aus dem Innenraum der Schaltanlage als auch umgekehrt die Schaltgeräteanordnung gegen Einflüsse von außen zu schützen.

Bekannte Dichtungsrahmen sind mehrteilige Vorrichtungen, die aus einem Rahmen, diesen gegen die Innenseite der Schaltanlagentür drückenden Federn sowie einem die Abdichtung zwischen dem Bedienungspult und der Durchtrittsöffnung der Tür bewirkenden Dichtungsbelag bestehen (z. B. US-A-2 770 701, DE-GM 1 830 872).

Der Erfindung liegt die Aufgabe zugrunde, einen solchen Dichtungsrahmen wesentlich zu vereinfachen.

Gemäß der Erfindung wird diese Aufgabe dadurch gelöst, daß der Dichtungsrahmen einstückig aus einem gummielastischen Werkstoff ausgebildet ist und an seinem inneren Umfang eine umlaufend angeordnete Dichtungslippe zur Anlage an der Umfangsfläche der Bedienungsfront und am äußeren Umfang Nuten zum Übergreifen der Ränder der Durchtrittsöffnung aufweist. Abgesehen von seinem einfachen Aufbau hat der neue Dichtungsrahmen auch den Vorteil, daß er an der Durchtrittsöffnung der Tür aufgrund der Verformbarkeit des gewählten Materials leicht anzubringen ist.

Es empfiehlt sich, den Abstand gegenüberliegender Nutböden geringer als die entsprechende Abmessung der Durchtrittsöffnung zu bemessen. Der Dichtungrahmen kann dann entsprechend der vorgesehenen Maßdifferenz relativ zu der Zutrittsöffnung verschoben werden, wodurch eine selbsttätige Zentrierung des Dichtungsrahmens gegenüber der Bedienungsfront der Schaltgeräteanordnung gewährleistet ist. Dabei ist es vorteilhaft, die Maßdifferenz zwischen dem Abstand der Nutböden und der zugeordneten Abmessung der Durchtrittsöffnung in horizontaler Richtung größer als in vertikaler Richtung zu bemessen. Auf diese Weise wird die relativ größere horizontale Verschiebung zwischen dem Dichtungsrahmen und der Tür beim Öffnen derselben berücksichtigt.

Zur Bedienung eines Fahrantriebes der Schaltgeräteanordnung ist es üblich, an der Tür der Schaltanlage eine Öffnung zum Einstecken eines geeigneten Werkzeuges vorzusehen. Diese Öffnung muß aber bei Nichtbenutzung durch ein Schutzorgan abgedeckt sein. In diesem Zusammenhang ist es vorteilhaft, den Dichtungsrahmen mit einer angeformten Schutzklappe zu versehen, welche die Bedienungsöffnung überdeckt. Dabei kann eine gesteigerte Dichtwirkung dadurch erreicht werden, daß die Schutzklappe in einer gegenüber der Hauptebene des Dichtungsrahmens geneigten Stellung angeformt ist, derart, daß die Schutzklappe im montierten Zustand des Dichtungsrahmens mit einer Vorspannung an der Tür anliegt.

Die Erfindung wird im folgenden anhand des in den Figuren dargestellten Ausführungsbeispieles näher erläutert.

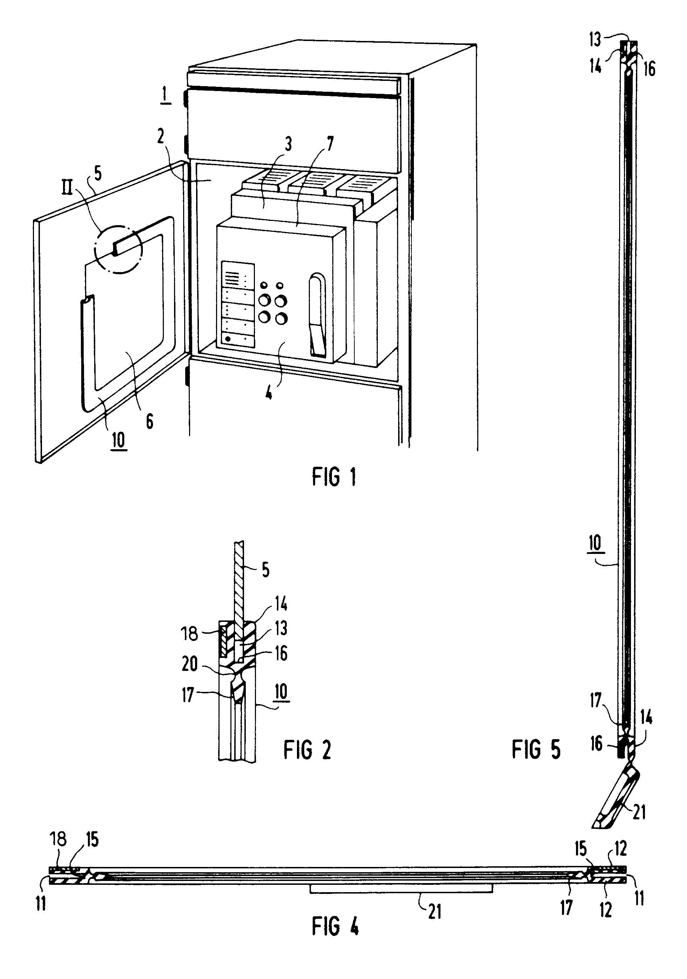

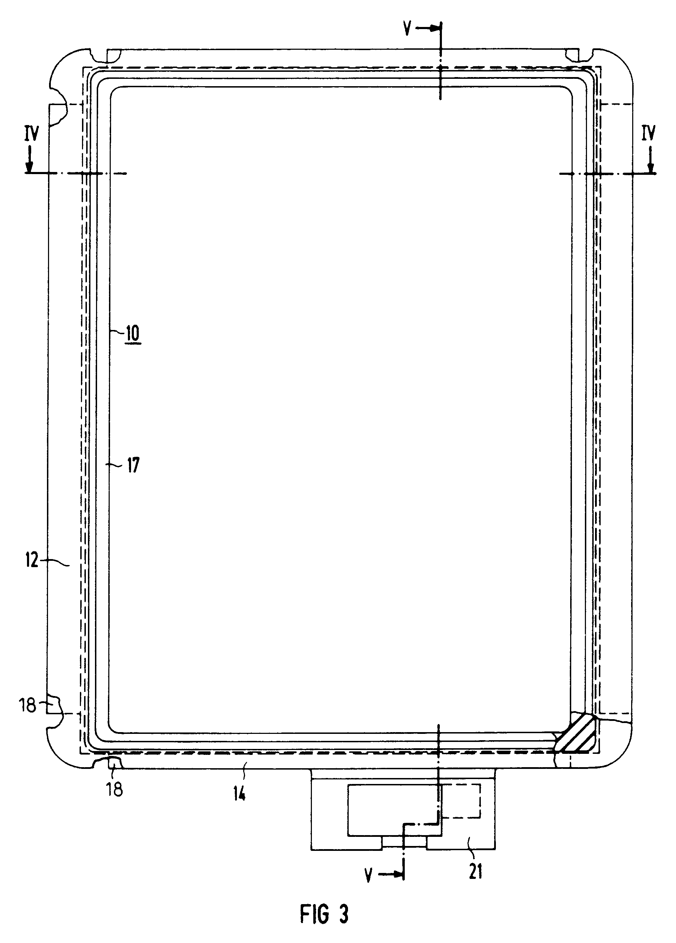

Die Figur 1 zeigt in einer perspektivischen Ansicht einen Teil eines Schaltschrankes mit einer Tür zum Abschluß einer Kammer, in der ein verfahrbar angeordneten Niederspannungs-Leistungsschalter untergebracht ist.

Eine in der Figur 1 mit einem Kreis markierte Einzelheit ist vergrößert und im Schnitt in der Figur 2 dargestellt.

Die Figur 3 zeigt einen Dichtungsrahmen mit angeformter Schutzklappe in der Draufsicht.

In der Figur 4 ist der Schnitt IV-IV in Figur 2 gezeigt.

Einen weiteren Schnitt entlang der Ebene V-V in Figur 2 zeigt die Figur 5.

Ein in der Figur 1 teilweise gezeigter Schaltschrank 1 ist in Kammern unterteilt, in denen verfahrbar angeordnete Schaltgeräteeinheiten untergebracht sind. In einer dieser Kammern 2 befindet sich ein Niederspannungs-Leistungsschalter 3 mit einer pultartigen Bedienungsfront 4. Bei geschlossener Tür 5 ragt die Bedienungsfront 4 durch eine Durchtrittsöffnung 6 der Tür 5 hindurch. Als Abdichtung zwischen der Umfangsfläche 7 der Bedienungsfront 4 und der Durchtrittsöffnung 6 in der Tür 5 ist ein Dichtungsrahmen 10 vorgesehen, dessen Einzelheiten im folgenden erläutert werden.

Der Dichtungsrahmen 10 (Figur 3) ist ein einstückiges Teil aus einem gummielastischen Werkstoff. Hierunter sind sowohl Gummimischungen geeigneter Elastizität als auch gummielastische Kunststoffe geeigneter Zusammensetzung oder Kunststoff-Gummimischungen zu verstehen. An seinem äußeren Umfang besitzt der Dichtungsrahmen 10 Nuten 11, die durch angeformte Stege 12 gebildet sind. An der Ober- und der Unterkante besitzt der Dichtungsrahmen 10 weitere Nuten 13, die durch Stege 14 gebildet sind. Wie insbesondere beim Vergleich der Nuten 11 und 13 in den Figuren 4 und 5 zu erkennen ist, sind die seitlichen Nuten 11 mit einer größeren Tiefe als die Nuten 13 an der Ober- und der Unterkante des Dichtungsrahmen 10 ausgeführt. Auf diese Weise wird berücksichtigt, daß sich der Dichtungsrahmen in horizontaler Richtung gegenüber der Öffnung 6 der Tür 5 beim Öffnen und Schließen gegenüber der Bedienungsfront 4 des Leistungsschalters 3 verschieben kann. Der Abstand der Nutböden 15 der gegenüberliegenden Nuten 11 ist somit gegenüber der Breite der Öffnung 6 stärker verkleinert als der Abstand der Nutböden 16 gegenüber der vertikalen Abmessung der Durchtrittsöffnung 6.

Wie insbesondere der Figur 2 zu entnehmen ist, die den in der Figur 1 markierten Ausschnitt vergrößert zeigt, übergreifen die Stege 14 den Rand der Öffnung 6 mit solcher Überdeckung, daß trotz einer relativen Verschiebung des Dichtungsrahmens 10 und der Tür 5 stets an den gegenüberliegenden Rändern die gewünschte Dichtigkeit besteht.

Wie anhand der ausgebrochen gezeigten Stellen in der Figur 3 erkennbar ist, erstrecken sich Metallstreifen 18 nur über einen Teil der gesamten Breite und Höhe des Dichtungsrahmens 10, derart, daß die Eckbereiche ausgenommen sind. Der Zweck der Metallstreifen 18 und ihre Befestigung werden noch erläutert.

Am inneren Umfang ist der Dichtungsrahmen 10 mit einer umlaufend angeordneten Dichtungslippe 17 versehen, die zur Verbesserung ihrer Biegsamkeit am Übergang zu dem äußeren Rahmenteil mit einer Einschnürung 20 versehen ist. Mit dieser Dichtungslippe 17 liegt der Dichtungsrahmen 10 am äußeren Umfang der Bedienungsfront 4 an und bildet die Abdichtung zwischen der Kammer 2 und der Umgebung.

An seiner Unterkante weist der Dichtungsrahmen 10 eine angeformte Schutzklappe 21 auf, die zur Abdeckung einer an dem Schaltschrank vorgesehenen Durchtrittsöffnung für ein Werkzeug vorgesehen sein kann, um den Fahrantrieb des Leistungsschalters oder einer anderen Schaltgeräteanordnung zu betätigen. Wie insbesondere die Figur 5 zeigt, ist die Schutzklappe 21 an den äußeren Steg 14 angeformt, und zwar in einer gegenüber der Hauptebene des Dichtungsrahmens 10 geneigten Stellung. Auf diese Weise gelangt die Schutzklappe 21 mit einer Vorspannung zur Anlage an der Tür 5, wenn der Dichtungsrahmen in der Öffnung 6 montiert wird. Dies verbessert die Abdichtung einer solchen Öffnung.

Die Stabilität des Dichtungsrahmens im nicht montierten Zustand hängt von der Größe und von dem gewählten Werkstoff ab. Ohne Nachteil für die übrigen Eigenschaften kann die Stabilität bzw. Formbeständigkeit durch dünne Metallstreifen 18 gesteigert werden, die in das gummielastische Material des Dichtungsrahmens 10 eingebettet bzw. auf dieses aufgebracht sind. Insbesondere zeigt die Figur 2 im Schnitt einen solchen Metallstreifen 18 im Schnitt. Weitere Metallstreifen 18 sind in der Figur 4 gezeigt. Es ist ausreichend, wenn sich je ein Metallstreifen über einen Teil der Länge jedes Seitenstückes des Dichtungsrahmens erstreckt. In dem dargestellten Ausführungsbeispiel sind somit vier Metallstreifen 18 vorhanden, die durch Vulkanisieren mit dem Werkstoff des Dichtungsrahmens verbunden sein können.

## Patentansprüche

1. Dichtungsrahmen für die Bedienungsfront einer verfahrbaren Schaltgeräteanordnung an der Durchtrittsöffnung in einer Tür eines Schaltschrankes, **dadurch gekennzeichnet,** daß der Dichtungsrahmen (10) einstückig aus einem gummielastischen Werkstoff ausgebildet ist und an seinem inneren Umfang eine umlaufend angeordnete Dichtungslippe (17) zur Anlage an der Umfangsfläche (7) der Bedienungsfront (4) und am äußeren Umfang Nuten (11, 13) zum Übergreifen der Ränder der Durchtrittsöffnung (6) aufweist.

2. Dichtungsrahmen nach Anspruch 1, **dadurch gekennzeichnet,** daß der Abstand gegenüberliegender Nutböden (15, 16) geringer als die entsprechende Abmessung der Durchtrittsöffnung (6) bemessen ist.

3. Dichtungsrahmen nach Anspruch 2, **dadurch gekennzeichnet,** daß die Maßdifferenz zwischen dem Abstand der Nutböden (15, 16) und der zugeordneten Abmessung der Durchtrittsöffnung (6) in horizontaler Richtung größer als in vertikaler Richtung bemessen ist.

4. Dichtungsrahmen nach einem der vorangehenden Ansprüche, **dadurch gekennzeichnet,** daß zur Überdeckung einer der Durchtrittsöffnung (6) nahegelegenen Bedienungsöffnung in der Tür (5) eine angeformte Schutzklappe (21) vorgesehen ist.

5. Dichtungsrahmen nach Anspruch 4, **dadurch gekennzeichnet,** daß die Schutzklappe (21) in einer gegenüber der Hauptebene des Dichtungsrahmens (10) geneigten Stellung angeformt ist, derart, daß die Schutzklappe (21) im montierten Zustand des Dichtungsrahmens (10) mit einer Vorspannung an der Tür (5) anliegt.

6. Dichtungsrahmen nach einem der vorangehenden Ansprüche, **dadurch gekennzeichnet,** daß wenigstens entlang Teilen des Dichtungsrahmens (10) ein dünner Metallstreifen (18) in das gummielastische Material eingebettet ist.

## Claims

1. Sealing frame for the operating front of a withdrawable switchgear arrangement against the through opening in a door in a switch cabinet, characterized in that the sealing frame (10) is formed in one piece from an elastomeric material, has a sealing lip (17) arranged circumferentially on its inner circumference, which lip lies against the circumferential surface (7) of the operating front (4), and has grooves (11,13) on its outer circumference which engage over the edges of the through opening (6).

2. Sealing frame according to Claim 1, characterized in that the spacing between opposite groove bases (15,16) is dimensioned to be less than the corresponding size of the through opening (6).

3. Sealing frame according to Claim 2, characterized in that the dimensional difference between the spacing of the groove bases (15,16) and the associated size of the opening (6) is dimensioned to be greater in the horizontal direction than in the vertical direction.

4. Sealing frame according to one of the preceding claims, characterized in that an integrally formed protective flap (21) is provided to cover an operating opening in the door (5), which operating opening is located near to the opening (6).

5. Sealing frame according to Claim 4, characterized in that the protective flap (21) is integrally formed in a position inclined with respect to the main plane of the sealing frame (10) in such a manner that the protective flap (21) lies in a prestressed manner against the door (5), in the assembled state of the sealing frame (10).

6. Sealing frame according to one of the preceding claims, characterized in that a thin metal strip (18) is embedded in the elastomeric material along at least parts of the sealing frame (10).

## Revendications

1. Cadre d'étanchéité pour la face de commande d'un dispositif mobile d'appareil de coupure à l'ouverture de passage ménagée dans une porte d'une armoire de commande, caractérisé par le fait que le cadre d'étanchéité (10) est d'un seul tenant en un matériau présentant l'élasticité du caoutchouc et comporte, sur son pourtour intérieur, une lèvre (17) d'étanchéité faisant tout le tour et destinée à s'appliquer à la surface (7) de pourtour de la face de commande (4) et, sur son pourtour extérieur, des rainures (11,13) d'accrochage aux bords de l'ouverture de passage (6).

2. Cadre d'étanchéité suivant la revendication 1, caractérisé par le fait que la distance de fonds opposés (15,16) des rainures est inférieure à la dimension correspondante de l'ouverture de passage (6).

3. Cadre d'étanchéité suivant la revendication 2, caractérisé par le fait que la différence entre la distance des fonds (15,16) des rainures et la dimension associée de l'ouverture de passage (6) est plus grande dans la direction horizontale que dans la direction verticale.

4. Cadre d'étanchéité suivant l'une des revendications précédentes, caractérisé par le fait que pour le recouvrement d'une ouverture de commande placée à proximité de l'ouverture de passage (6), un volet de protection (21) est issu de la porte (5).

5. Cadre d'étanchéité suivant la revendication 4, caractérisé par le fait que le volet de protection (21) est incliné par rapport au plan principal du cadre d'étanchéité (10), de sorte que le volet de protection (21) s'applique sous précontrainte à la porte (5), lorsque le cadre d'étanchéité (10) est monté.

6. Cadre d'étanchéité suivant l'une des revendications précédentes, caractérisé par le fait qu'une bande métallique (18) mince est insérée dans le matériau présentant l'élasticité du caoutchouc, au moins le long de parties du cadre d'étanchéité (10).
